# FASCICULE DE BREVET EUROPEEN

(11) **EP 1 419 719 B1**
(45) Date de publication et mention de la délivrance du brevet: **22.06.2005**
(21) Numéro de dépôt: 03356166.3
(22) Date de dépôt: 28.10.2003
(51) Int. Cl.: A47J 27/21, A47J 36/10

(54) **Couvercle automatique de bouilloire**
Automatischer Deckel für Wasserkocher
Automatically operable lid for a kettle

(30) Priorité: 15.11.2002 FR 0214284
(43) Date de publication de la demande: 19.05.2004
(73) Titulaire: SEB S.A., 69130 Ecully (FR)
(72) Inventeur: Gaulard, Hervé, 39700 Courtefontaine (FR)
(74) Mandataire: Kiehl, Hubert

(56) Documents cités:
- DE-U- 29 610 394
- US-A- 6 065 626
- US-A1- 2002 038 804

## Description

La présente invention concerne un récipient fermé par un couvercle. Elle s'applique notamment, mais non exclusivement, aux bouilloires électriques ou aux appareils de chauffage de liquides, comportant un récipient pourvu d'une poignée de maintien du récipient, d'un bec verseur, et d'une ouverture supérieure de remplissage qui peut être fermée par un couvercle articulé.

Il est nécessaire de verrouiller correctement le couvercle des appareils chauffants pour éviter les risques de brûlures au cas où le récipient se renverse. Le couvercle ne doit pas s'ouvrir si le récipient plein d'eau est renversé sur le coté, de façon à éviter un épanchement brusque du liquide.

Il existe des récipients fermés par différents types de couvercles dont l'ouverture et/ou la fermeture sont actionnés par un bouton poussoir. Le brevet FR2810642 décrit un exemple perfectionné de ces systèmes. Mais lorsque le bouton est petit, il n'est pas facilement manoeuvrable, et lorsqu'il est prévu pour occuper une grande partie de la surface du couvercle, il facilite les infiltrations accidentelles de liquide dans le couvercle et son mécanisme de verrouillage. Le nettoyage et l'entretien de l'appareil sont peu commodes.

On connaît le brevet US6065626 dans lequel le couvercle du récipient est fermé manuellement puis verrouillé par une simple pression sur le dessus, et déverrouillé par une nouvelle pression de même direction et sensiblement même point d'application sur le couvercle. Le couvercle comporte une pièce externe visible quand l'appareil est fermé, et une pièce de grandes dimensions, interne, assurant l'étanchéité de la fermeture, reliée à la précédente par un ressort. Le couvercle est donc en deux parties légèrement mobiles l'une par rapport à l'autre. Elles sont séparées par un intervalle peu esthétique en position ouverte et difficile d'entretien. L'étanchéité complète de ce couvercle sur son récipient est superflue pour l'application à des appareils tels que les bouilloires.

On connaît également des récipients fermés par des couvercles ayant un simple verrou élastique. Mais ces fermetures ne comportent pas de verrouillage sûr. La pression du liquide peut ouvrir le couvercle, en cas de renversement. L'ouverture et la fermeture nécessitent des efforts opposés sur le système de verrouillage.

L'objet de l'invention est un appareil comportant un récipient ayant un couvercle articulé, esthétique et facile à entretenir, le couvercle pouvant être verrouillé mécaniquement de façon sûre et déverrouillé commodément sans que l'utilisateur soit contraint de cibler un bouton.

Le but de l'invention est atteint par un appareil ayant un récipient fermé par un couvercle articulé selon la revendication indépendante 1.

Par enveloppe externe monobloc on entend un objet se présentant pour l'utilisateur principalement sous la forme d'une seule partie indéformable, sans tenir compte d'éventuelles petites pièces apparentes telles que des joints d'étanchéité ou des axes d'articulation. Cette forme externe monobloc peut être réalisée par l'assemblage définitif de plusieurs coques.

Grâce à cette constitution de l'enveloppe externe d'un seul tenant, le couvercle est esthétique et facile à nettoyer. Le verrou mécanique ne permet l'ouverture du récipient que selon l'action d'une pression appropriée sur le couvercle, à l'exclusion de toute perturbation aléatoire telle qu'un renversement de l'appareil. L'absence de bouton facilite l'utilisation de l'appareil.

De préférence, les moyens de verrouillage comportent un doigt de verrouillage destiné à s'engager dans une encoche pendant la fermeture.

De préférence, les moyens de verrouillage comportent une bascule mécanique qui mémorise l'état du doigt de verrouillage et, durant la fermeture du récipient, le maintient en position de verrouillage.

Ainsi, la bascule autorise le doigt à occuper une position précise. Lorsque le couvercle est ouvert, la bascule autorise le doigt à prendre la position de fermeture sous l'action d'une pression sur le couvercle, puis, après relâchement de cette première pression, elle maintient le doigt en position de fermeture et l'autorise à se rétracter de l'encoche seulement sous l'action d'une nouvelle pression sur le couvercle.

Dans une première version, le doigt de verrouillage et la bascule sont solidaires du couvercle et l'encoche est située sur le récipient.

Dans une deuxième version, le doigt et la bascule sont solidaires du récipient et l'encoche est située sur le couvercle.

L'invention sera mieux comprise au vu de la description ci-après et des dessins annexés.
La figure 1 est une vue partielle en perspective et coupe partielle par deux plans perpendiculaires de la partie supérieure d'un appareil selon l'invention.
La figure 2 est une vue de détail du doigt de verrouillage et de la bascule.
La figure 3 est une coupe schématique de la partie supérieure de l'appareil de la figure 1 par un plan de symétrie, le couvercle étant fermé.
La figure 31 est une vue de détail de la figure 3.

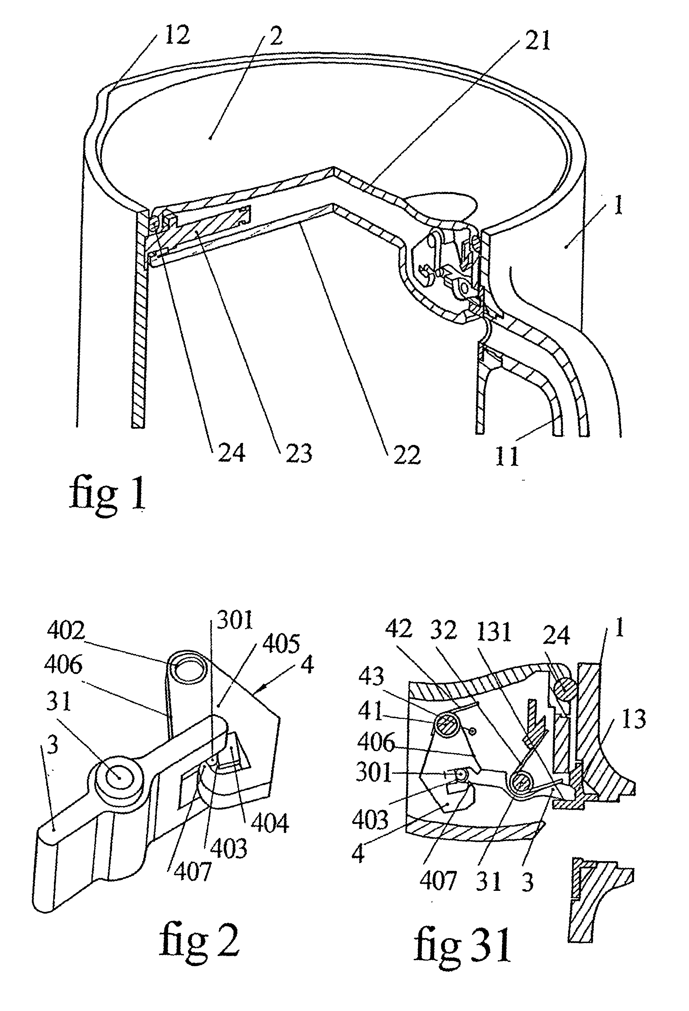

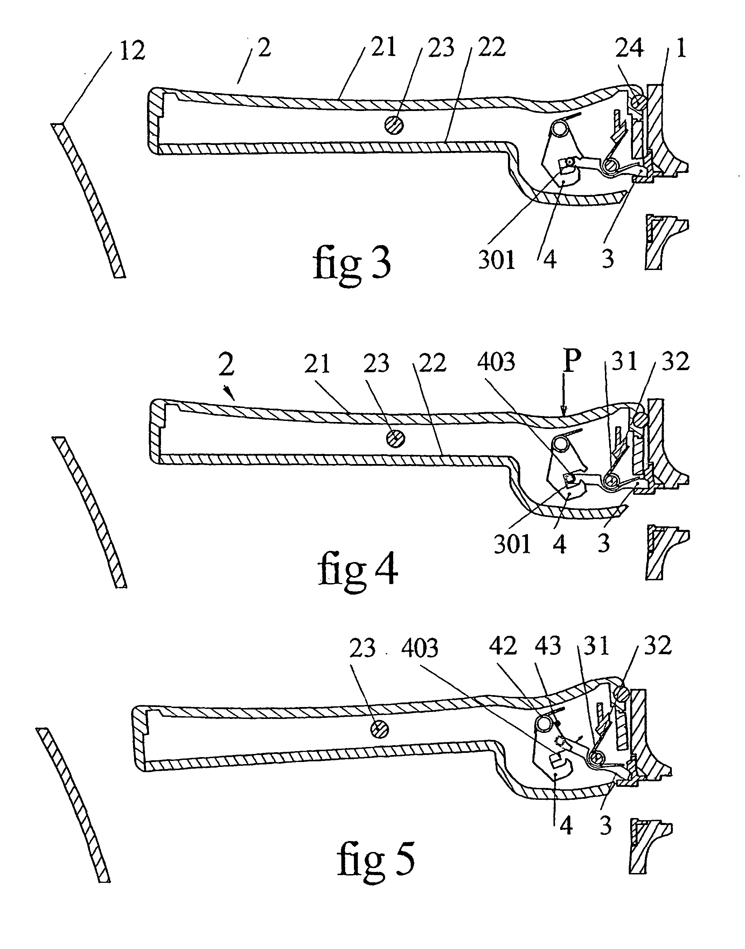

Les figure 4-8 sont des coupes schématiques de la partie supérieure de l'appareil de la figure 1 par un plan de symétrie, le couvercle étant dans différentes positions.

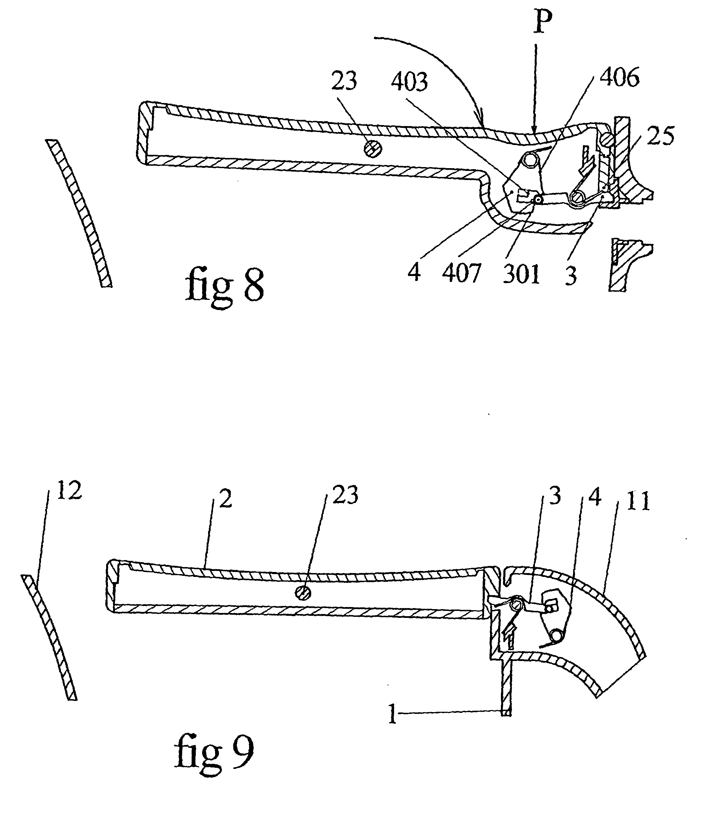

La figure 9 est une coupe schématique par un plan de symétrie de la partie supérieure d'un autre appareil selon l'invention, le couvercle étant fermé.

Dans une première version préférentielle visible en figure 1, l'appareil est une bouilloire qui comporte un récipient 1 cylindrique, ayant une ouverture supérieure, une poignée 11 et un bec verseur 12, la poignée et le bec verseur étant sensiblement situés à l'opposé sur un diamètre de l'ouverture. L'ouverture supérieure est fermée par un couvercle 2 articulé autour d'un axe perpendiculaire au plan de symétrie de l'appareil et passant à proximité d'un diamètre de l'ouverture. Le couvercle est formé essentiellement d'une pièce supérieure 21 et d'une pièce inférieure 22 réunies latéralement pour former une galette creuse formant un seul bloc. L'axe de l'articulation est matérialisé par des axes métalliques 23 positionnés entre les deux pièces 21 et 22 formant le couvercle 2 de manière à laisser libre en rotation l'ensemble du couvercle. Deux ressorts non représentés sont montés sur les axes 23 de manière à faire basculer l'ensemble couvercle vers l'avant du récipient 1, c'est à dire vers le bas du coté du bec verseur 12. Un joint 24 est positionné à l'extérieur du couvercle 2 de manière à assurer une étanchéité entre le couvercle 2 et le récipient 1 lorsque le couvercle 2 est en position fermée.

L'appareil comporte à l'opposé du bec verseur 12 un mécanisme de verrouillage du couvercle 2 sur le récipient 1, mieux visible sur les figures 2 et 31. Ce mécanisme comprend un doigt de verrouillage 3 oscillant autour d'un axe 31 et rappelé par un ressort 32, ainsi qu'une bascule 4 oscillant autour d'un axe 41 et rappelée par un ressort 42. L'ensemble du mécanisme est logé dans le couvercle 2 entre les pièces 21 et 22, de sorte que seule une extrémité du doigt de verrouillage 3 apparaît à l'extérieur du couvercle 2 par une fenêtre ménagée dans la paroi latérale du couvercle 2.

L'extrémité apparente du doigt de verrouillage 3 est susceptible de s'engager dans une forme en encoche 13 du récipient 1, l'encoche comportant une partie basse horizontale 131. Lorsque le couvercle est fermé et que le doigt est dans cette encoche comme représenté sur les figures 3-31 il immobilise le couvercle.

L'autre extrémité du doigt de verrouillage 3 porte un téton 301 destiné à venir en contact avec la bascule 4.

La bascule 4 est constituée d'une plaque plane épaisse, ayant un bord 406 s'écartant de l'axe 41. L'extrémité de ce bord 406 se termine par l'ouverture d'une encoche étagée sur deux profondeurs constituant une marche d'escalier 404, taillée en pente sur l'épaisseur de la pièce, comme représenté en figure 2. L'autre bord de l'ouverture de l'encoche, partiellement refermée pour masquer la partie la plus profonde, constitue un bec 407 en retrait par rapport au bord 406. La bascule 4 est montée sur son axe 41 de manière à avoir un certain angle de liberté aussi bien latéral qu'en rotation. Une butée 43 limite son débattement en rotation dans un sens. Le ressort 42 maintient la bascule 4 en contact contre le téton 301 du doigt de verrouillage 3 ou à défaut contre la butée 43. Le ressort 42 maintient aussi la bascule 4 dans un plan perpendiculaire à l'axe 41 de manière à ce qu'elle soit en position verticale au repos. Toutefois lorsque la bascule 4 est poussée parallèlement à l'axe 41 par le doigt de verrouillage 3 elle se déplace en oblique, dans une oscillation d'axe perpendiculaire à l'axe de rotation 41, grâce à une forme arrondie 402 de sa portée sur l'axe 41. Dans ce mouvement, elle reste en appui contre le doigt de verrouillage 3, sous l'action du ressort 42.

La figure 3 représente l'appareil avec le couvercle en position fermée. L'extrémité apparente du doigt de verrouillage 3 est positionnée dans l'encoche 13 du récipient 1. Le téton 301 est en appui contre la face 403 sur un premier étage de l'encoche pratiquée dans la bascule 4, empêchant ainsi le doigt de verrouillage 3 de tourner autour de son axe sous l'action du ressort 32. Le couvercle 2 ne peut pas s'ouvrir.

Pour ouvrir le couvercle, on exerce une pression P à l'arrière du couvercle 2. Le couvercle bascule alors autour des axes 23. Le doigt de verrouillage 3 étant dans l'encoche 13 s'appuie sur la face 131 et pivote, dans le sens anti-horaire sur les figures 3 et suivantes, autour de son axe 31. Le téton 301 glisse contre la face 403 jusqu'à échapper à cette face 403. La bascule 4 pivote alors dans le sens anti-horaire sous l'action du ressort 42 et le téton 301 se trouve positionné en regard de la pente 404.

Au relâchement de la pression P exercée sur le couvercle 2, comme représenté en figure 4, le ressort 32 exerce sur le doigt de verrouillage un effort de rappel qui commence à soulever le bord du couvercle 2 et le téton 301 glisse sur la pente 404 ce qui, dans le même temps, déplace latéralement la bascule 4. Le couvercle est alors déverrouillé.

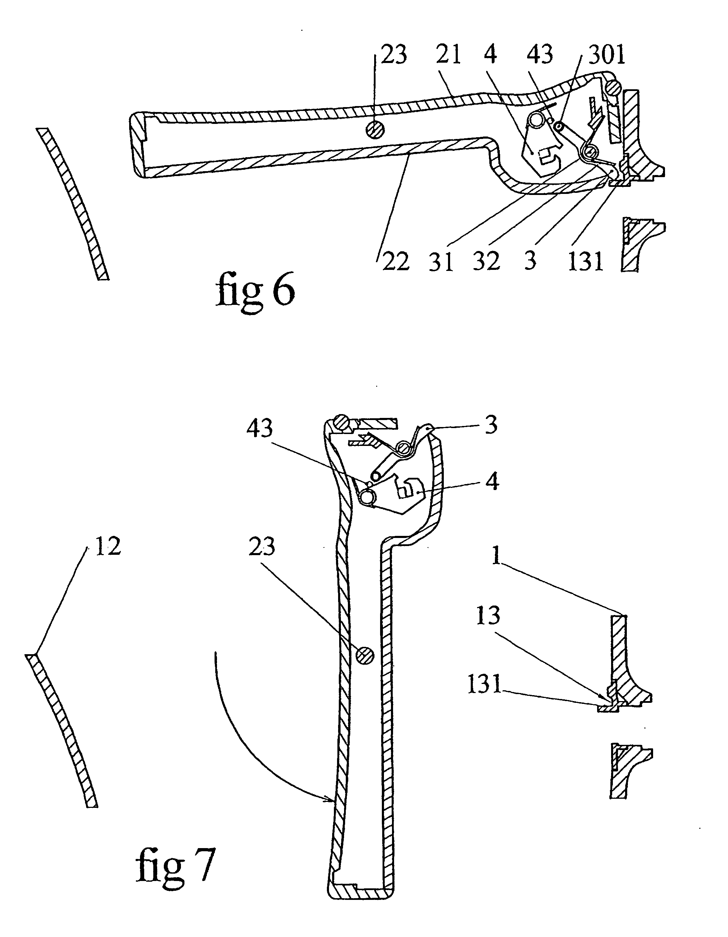

Lorsque la pression P sur le couvercle 1 finit de se relâcher, comme représenté en figure 5, l'ensemble couvercle remonte sous l'effet du doigt de verrouillage 3 qui appuie sur la partie horizontale 131 de l'encoche 13. La force d'ouverture est donnée par le ressort 32, qui contraint le doigt de verrouillage à tourner, dans le sens horaire sur la figure. Pendant cette phase d'ouverture, le téton 301 glisse contre la face 405 de la bascule 4 sans difficulté, jusqu'à ce que le doigt de verrouillage 3 vienne contre une butée constituée par un bord de la pièce 22 du couvercle 2. Cette dernière position est représentée en figure 6.

Dans cette position, le doigt de verrouillage 3 étant en fin de course, le couvercle est ouvert de quelques degrés et le téton 301 s'est dégagé de la bascule venue en fin de course contre sa butée 43 sous l'action du ressort 42. Dès que le téton 301 n'est plus en contact avec la bascule 4, celle-ci reprend sa position verticale d'origine sous l'effet du ressort 42. Le ressort 32 est suffisamment dimensionné pour vaincre les frottements et plus particulièrement celui généré par le joint 24 glissant contre la paroi du récipient 1.

L'essentiel des efforts de frottement ayant été produits, les deux ressorts situés sur les axes 23 terminent l'ouverture du couvercle pour l'amener dans la position de la figure 7 de pleine ouverture.

Dans une version plus simple, sans ressort autour des axes 23, l'ouverture est terminée à la main. Dans une autre version, le couvercle est équilibré pour qu'il bascule naturellement vers l'avant.

Pour refermer l'ensemble couvercle, l'utilisateur rabat le couvercle 2 et appuie à l'arrière. L'extrémité apparente du doigt de verrouillage 3 est mise en contact et glisse le long de la partie horizontale 131 de l'encoche 13. Le téton 301 vient alors en contact avec le bord 406 de la bascule 4 et glisse contre celle ci, entraînant en rotation la bascule 4 jusqu'à ce que le doigt de verrouillage 3 soit en contact avec une butée 25, comme représenté en figure 8.

La forme et les efforts des différentes pièces sont définies de manière à ce que lorsque le doigt de verrouillage 3 est en butée dans cette position, le téton 301 se trouve en contact avec la partie de la bascule 4 formant un bec 407. En particulier le bec 407 est en retrait du bord 406 de la bascule, si on considère la trajectoire du téton 301. La vitesse et la forme du doigt de verrouillage 3 combinés à la force du ressort 42 et à la forme de la bascule 4 empêchent le téton 301 de tomber dans l'espace libre en encoche de la bascule 4 situé entre le bord 406 et le bec 407.

Lorsqu'on relâche la pression sur le couvercle 2, le couvercle remonte dans sa position initiale sous l'action du doigt de verrouillage 3 appuyant sur la partie horizontale 131 de l'encoche 13 jusqu'à ce que le téton 301 vienne en appui contre la face 403 de la bascule 4. Le couvercle retrouve la position de la figure 3 où il est alors verrouillé sur le récipient 1.

Une deuxième version d'un appareil selon l'invention est représentée en figure 9. L'appareil est similaire à celui décrit précédemment, mais l'essentiel du mécanisme de verrouillage comprenant le doigt de verrouillage 3 et la bascule 4 est logé dans la poignée 11 sur le récipient 1.

La disposition du mécanisme de verrouillage est inversée, mais le fonctionnement est similaire à celui de l'appareil précédent.

Par ces moyens, on obtient un appareil pratique, esthétique, et facile à nettoyer, sans bouton de fermeture ou d'ouverture du couvercle.

## Revendications

1. Appareil ayant un récipient (1) fermé par un couvercle (2) articulé, le couvercle (2) formant un ensemble monobloc, l'appareil comportant des moyens de verrouillage mécaniques du couvercle (2) sur le récipient (1), agissant à la fermeture du couvercle (2) sous l'action d'une première pression sur ce couvercle (2), le verrouillage se relâchant sous l'action d'une deuxième pression sur le couvercle (2) pour en permettre l'ouverture, **caractérisé en ce que** le couvercle (2) comprend une enveloppe externe monobloc.

2. Appareil selon la revendication 1 **caractérisé en ce que** les moyens de verrouillage comportent un doigt de verrouillage (3) destiné à s'engager dans une encoche (13) pendant la fermeture.

3. Appareil selon la revendication 2 **caractérisé en ce que** les moyens de verrouillage comportent une bascule mécanique (4) qui mémorise l'état du doigt de verrouillage (2) et, durant la fermeture du récipient (1), le maintient en position de verrouillage.

4. Appareil selon la revendication 3 **caractérisé en ce que** la bascule (4) est une plaque plane munie d'une encoche étagée, tournant autour d'un axe (41) et pouvant s'incliner dans une oscillation d'axe perpendiculaire à l'axe de rotation (41).

5. Appareil selon la revendication 4 **caractérisé en ce que** un étage (404) de l'encoche de la bascule (4) est taillé en pente dans l'épaisseur de la plaque.

6. Appareil selon la revendication 5 **caractérisé en ce que** le doigt de verrouillage (3) porte un téton (301).

7. Appareil selon la revendication 6 **caractérisé en ce que** le téton (301) circule successivement le long d'un bord (406), dans l'encoche étagée, et contre une face (405) de la bascule (4) pendant les différentes phases de fermeture et d'ouverture du couvercle (2).

8. Appareil selon l'une des revendications précédentes **caractérisé en ce que** l'appareil est une bouilloire.

## Patentansprüche

1. Gerät mit einem Behälter (1), der durch einen angelenkten Deckel (2) geschlossen ist, wobei der Deckel (2) eine einstückige Baugruppe bildet, wobei das Gerät mechanische Mittel zur Verriegelung des Deckels (2) am Behälter (1) aufweist, die wirken, wenn der Deckel (2) unter der Wirkung eines ersten Drucks auf diesen Deckel (2) geschlossen wird, wobei sich die Verriegelung unter der Wirkung eines zweiten Drucks auf den Deckel (2) wieder löst, so dass sein Öffnen ermöglicht wird, **dadurch gekennzeichnet, dass** der Deckel (2) eine einstückige Außenhülle aufweist.

2. Gerät nach Anspruch 1, **dadurch gekennzeichnet, dass** die Verriegelungsmittel einen Verriegelungszapfen (3) aufweisen, der beim Schließen in eine Einkerbung (13) eingreifen soll.

3. Gerät nach Anspruch 2, **dadurch gekennzeichnet, dass** die Verriegelungsmittel eine mechanische Wippe (4) aufweisen, die den Zustand des Verriegelungszapfens (3) speichert und diesen in der Verriegelungsposition hält, wenn der Behälter (1) geschlossen ist.

4. Gerät nach Anspruch 3, **dadurch gekennzeichnet, dass** die Wippe (4) eine ebene Platte ist, die mit einer abgestuften Einkerbung versehen ist, um eine Achse (41) dreht und sich in eine Schwingung neigen kann, deren Achse senkrecht zur Drehachse (41) ist.

5. Gerät nach Anspruch 4, **dadurch gekennzeichnet, dass** eine Abstufung (404) der Einkerbung der Wippe (4) schräg in die Dicke der Platte geschnitten ist.

6. Gerät nach Anspruch 5, **dadurch gekennzeichnet, dass** der Verriegelungszapfen (3) einen Ansatz (301) trägt.

7. Gerät nach Anspruch 6, **dadurch gekennzeichnet, dass** der Ansatz (301) allmählich entlang eines Randes (406) in der abgestuften Einkerbung und in den verschiedenen Schließ- und Öffnungsphasen des Deckels (2) gegen eine Fläche (405) der Wippe (4) läuft.

8. Gerät nach einem der vorhergehenden Ansprüche, **dadurch gekennzeichnet, dass** das Gerät ein Kocher ist.

## Claims

1. An appliance having a receptacle (1) closed by a hinged lid (2), the lid (2) forming a one-piece unit, the appliance including mechanical locking means for locking the lid (2) onto the receptacle (1), acting during closure of the lid (2), under drive from pressure applied to the lid (2) a first time, the locking being released under drive from pressure applied to the lid (2) a second time in order to open the lid, said appliance being **characterized in that** the lid (2) comprises a one-piece outer casing.

2. An appliance according to claim 1, **characterized in that** the locking means include a locking finger (3) serving to be engaged in a notch (13) during closure.

3. An appliance according to claim 2, **characterized in that** the locking means include a mechanical rocker keeper (4) which stores the state of the locking finger (2) and, during closure of the receptacle (1), holds it in the locking position.

4. An appliance according to claim 3, **characterized in that** the rocker keeper (4) is a plane plate that is provided with a staggered notch, that is mounted to tum about a pin (41), and that can tilt about an axis that is perpendicular to the pin (41) about which it is mounted to turn.

5. An appliance according to claim 4, **characterized in that** one level (404) of the notch of the rocker keeper (4) is cut to slope in the thickness of the plate.

6. An appliance according to claim 5, **characterized in that** the locking finger (3) carries a stud (301).

7. An appliance according to claim 6, **characterized in that** the stud (301) travels successively along an edge (406), in the staggered notch, and against one face (405) of the rocker keeper (4) during the various stages of closing and of opening of the lid (2).

8. An appliance according to any preceding claim, **characterized in that** the appliance is a kettle.
